# EUROPÄISCHE PATENTSCHRIFT

(11) **EP 3 456 198 B1**
(45) Veröffentlichungstag und Bekanntmachung des Hinweises auf die Patenterteilung: **22.04.2020**
(21) Anmeldenummer: 18020397.8
(22) Anmeldetag: 21.08.2018
(51) Int. Cl.: A01M 23/24, A01M 25/00, A01M 31/00

(54) **VORRICHTUNGEN ZUR BEKÄMPFUNG VON SCHADNAGERN**
DEVICES FOR THE CONTROL OF RODENTS
DISPOSITIFS DE LUTTE CONTRE LES RONGEURS NUISIBLES

(30) Priorität: 22.08.2017 DE 202017004354 U; 20.06.2018 DE 202018002880 U
(43) Veröffentlichungstag der Anmeldung: 20.03.2019
(73) Patentinhaber: Rattex GmbH, 42657 Solingen (DE)
(72) Erfinder: Bartels, Rainer, 42657 Solingen (DE)
(74) Vertreter: Völger, Karl Wolfgang

(56) Entgegenhaltungen:
- WO-A1-2015/081963
- DE-A1-102011 018 209
- GB-A- 420 932
- GB-A- 541 844
- US-A- 2 532 681

## Beschreibung

Die vorliegende Erfindung bezieht sich auf eine Vorrichtung zur Bekämpfung von Schadnagern.

Die Bekämpfung von Schadnagern kann entweder über Lebendfallen oder über Totfangfallen erfolgen. Die Fallen müssen die Forderung des Tierschutzgesetzes erfüllen, insbesondere das schmerzfreie Abtöten im Verhältnis zu erforderlichen Notwendigkeiten. Beispiele für Totfangfallen sind zum einen mit einem Giftköder bestückte Fallen und zum anderen Schlagfallen, die durch Druck auf einen Wirkmechanismus (Auslöseplatte) oder Anheben eines Köders ausgelöst werden können. Insbesondere in Betrieben der Lebensmittel- oder Pharmaindustrie kann bei der Festlegung einer Bekämpfungs- und/oder Vorbeugungsstrategie gegen Schadnager zu berücksichtigen sein, dass Lebensmittelsicherheit und Hygiene eingehalten werden. Es darf aufgrund von Verschleppungsgefahren nicht möglich sein, dass Gifte zum Bekämpfen von Schädlingen außerhalb der Fallen zum Einsatz kommen. Allerdings erfordern Totfangfallen mit Schlagfallen einen erhöhten Aufwand insbesondere bezüglich der Bestückung, Kontrolle, Scharfstellung und Handhabung. Dies rührt vor allen Dingen daher, weil die Schadnager gelernt haben, dass in bestimmten Situationen und/oder räumlichen Gegebenheiten Gefahren existieren. Die Sensibilisierung der Schadnager hat zu einer geringeren Ausbeute von gefangenen bzw. getöteten Schadnagern geführt.

Gattungsgemäße Schadnagerfallen oder Köderboxen sind aus dem Stand der Technik in verschiedenen Varianten an sich bekannt.

So beschreibt beispielsweise DE 10 2014 004 807 A1 eine Tierfalle zur Bekämpfung von Schadnagern mit mindestens zwei Totfangfallen in einem randseitig umschlossenen Kanal, wobei in dem Kanal Aufstandsflächen hintereinander für die Totfangfallen vorhanden sind, wobei die Lichte über einer Totfangfalle derart an den Schadnager angepasst ist, dass ein Überspringen der Totfangfalle ermöglicht ist.

Ferner ist aus DE 20 2015 100 251 U1 eine Schadnagerfalle bekannt bestehend aus einem Gehäuse, welches einen Innenraum umschließt und zumindest eine Öffnung aufweist, welche den Innenraum mit der Umgebung verbindet, wobei in dem Innenraum eine Abgabeeinrichtung zur Auftragung eines Wirkstoffes (8) auf den sich im Innenraum aufhaltenden Schadnager angeordnet ist.

Darüber hinaus offenbart WO 2012/143140 A1 eine Köderbox zum Bekämpfen von Schadnagern, bestehend aus einem allseitig geschlossenen Halter mit wenigstens zwei seitlichen Öffnungen. Der Behälter ist zum Einsetzen eines Schaumstoffkerns, in welchem ein Gangsystem und zumindest eine Köderkammer eingearbeitet ist, öffnungsfähig. Das Gangsystem ist durch die seitlichen Eintrittsöffnungen zugänglich.

Durch seine niedrige Wärmeleitfähigkeit soll der Schaumstoffkern in seinem Innern eine behagliche Atmosphäre bewirken, so dass ein Schadnager zum Eintreten in die Köderbox verleitet wird.

Seit geraumer Zeit ist jedoch festzustellen, dass herkömmliche Totfangfallen in Form von Köderboxen mit Köderblöcken für Schadnager immer unattraktiver werden und somit bei der Bekämpfung mit Gift immer größere Probleme auftreten. Ähnliches gilt für mit Ködern versehene Schlagfallensysteme. Gleichzeitig scheuen die Schadnager immer stärker die vorstehend erwähnten klassischen Fallen und aus dem Stand der Technik bekannte Systeme und betreten immer schwieriger diese bekannten Köderstationen. Neben der Tatsache, dass die meisten herkömmlichen Totfangfallen eine unnatürliche und damit "fremde" Umgebung für die Schadnager darstellen, liegt der Grund vor allem darin, dass die im natürlichen Bewegungsumfeld der Schadnager aufgestellten Köderstationen die den Tieren bekannten Wege unterbrechen und damit deren Bewegungsumfeld stören. Wie erwähnt haben Schadnager in zunehmendem Maße gelernt, dass in bestimmten Situationen und/oder räumlichen Gegebenheiten Gefahren existieren.

Nachteilig am bekannten Stand der Technik ist somit, dass trotz aller Bemühungen und Ansätze eine herkömmliche Köderstation oder Schadnagerfalle einen Eingriff in das Bewegungsumfeld der Tiere darstellt und daher dem Ziel der Bekämpfung entgegen wirkt.

Darüber hinaus sind die derzeit zugelassenen Bekämpfungspräparate sämtlich mit Bitterstoffen versetzt. Dadurch sollte erreicht werden, dass Nichtzielorganismen die Mittel nicht versehentlich aufnehmen. Zwischenzeitlich hat sich aber auch gezeigt, dass die Nager den Stoff teilweise ebenfalls als ungeeignet identifizieren, besonders dann, wenn "unattraktive" oder als im Umfeld störende Köderstationen eingesetzt werden.

Ausgehend von den vorstehend genannten Nachteilen des Standes der Technik liegt der vorliegenden Erfindung die Aufgabe zugrunde, eine Vorrichtung zur Bekämpfung von Schadnagern bereitzustellen, welche diese Nachteile überwindet, insbesondere keine Störung des Bewegungsumfeldes darstellt und gleichzeitig die Akzeptanz bei den Schadnagern erhöht, indem sie die natürliche Neugier der Schadnager nutzt.

Diese Aufgabe wird in der vorliegenden Erfindung durch eine Vorrichtung zur Bekämpfung von Schadnagern gelöst, umfassend
- einen Grundkörper (1), der einen Boden (101) und eine um den Boden (101) umlaufende Wand (103) aufweist,
- einen den Grundkörper (1) abschließenden Deckel (3) und
- ein in dem Grundkörper (1) angeordnetes erstes Formteil (5),
dadurch gekennzeichnet,
dass der Grundkörper (1) auf mindestens einem Standelement (105) ruht, das den Grundkörper (1) mit einem Abstand (A) zu einer Aufstandfläche positioniert,
dass im Boden (101) des Grundkörpers (1) mindestens eine erste Öffnung (107) angeordnet ist, und
dass in dem ersten Formteil (5) mindestens eine zweite Öffnung (501) angeordnet ist, die mit der mindestens einen ersten Öffnung (107) im Boden (101) des Grundkörpers (1) korrespondiert.

Die Vorrichtung der vorliegenden Erfindung weist den Vorteil auf, dass durch das Positionieren des Grundkörpers (1, 11) mit einem Abstand (A) zu einer Aufstandsfläche das natürliche Bewegungsumfeld von Schadnagern nicht gestört wird, da die Vorrichtungen gleichsam auf Stelzen stehen und die Schadnager so problemlos unter diesen durchlaufen können. Es wird somit keine Bodenplatte auf den vorgeprägten Laufwegen (durch Kot, Urin und Fettschlieren markiert) der Schadnager positioniert. Der eigentliche "Fangkasten" liegt also oberhalb der Laufwege und kann als "Wohn- und Nahrungsräumlichkeit" bezeichnet werden.

Darüber hinaus besteht ein Vorteil im Anordnen des ersten Formteils (5) im Inneren des Grundkörpers (1), so dass in der Vorrichtung ein abgeschlossener Raum (Innenraum (121)) geschaffen wird, der von den Schadnagern als Versteck oder Nistplatz akzeptiert werden kann.

Nachstehend wird die Erfindung im Detail beschrieben.

Die vorliegende Erfindung betrifft eine Vorrichtung zur Bekämpfung von Schadnagern, insbesondere ein Fallensystem, in dem beispielsweise Fraßköder angeordnet werden können. Ein Grundkörper (1) weist dabei einen Boden (101) und eine um den Boden (101) umlaufende Wand (103) auf. Der Grundkörper (1) kann dabei eine rechteckige Grundform besitzen und die umlaufende Wand (103) in vier Teilwände (103a, 103b, 103c, 103d) aufgeteilt sein. Abhängig von den örtlichen Gegebenheiten, an denen die erfindungsgemäße Vorrichtung gemäß erstem Aspekt zur Bekämpfung von Schadnagern aufgestellt werden soll, sind jedoch auch andere Formen möglich, beispielsweise Winkelvorrichtungen mit im Wesentlichen dreieckiger Grundfläche, welche insbesondere in Ecken angeordnet werden können, oder ebenso Vorrichtungen mit runder Grundfläche, um diese an speziellen Orten aufzustellen. Der Grundkörper (1) wird von einem Deckel (3) abgeschlossen. Vorzugsweise wird der Deckel (3) oben auf dem Grundkörper (1) angeordnet.

In dem Grundkörper (1) ist ein erstes Formteil (5) angeordnet. Dieses erste Formteil (5) ist vorzugsweise so ausgelegt, dass es genau in das Innenmaß des Grundkörpers (1) passt, insbesondere mit einem Klemmsitz. In diesem Fall sind keine weiteren Befestigungsmittel notwendig.

Die erfindungsgemäße Vorrichtung zeichnet sich zunächst dadurch aus, dass der Grundkörper (1) auf mindestens einem Standelement (105) ruht, das den Grundkörper (1) mit einem Abstand (A) zu einer Aufstandsfläche positioniert. Das mindestens eine Standelement (105) kann unterschiedlich ausgestaltet sein, solange es für die erfindungsgemäße Vorrichtung einen festen Stand bietet. Vorzugweise sind zumindest drei Standelemente (105a, 105b, 105c) vorgesehen, um einen sicheren Dreipunktstand zu gewährleisten. Die einzelnen Standelemente (105) sind dabei geometrisch so ausgelegt, dass sie das natürliche Bewegungsumfeld von Schadnagern so wenig wie möglich stören, beispielweise durch eine parallel der Laufrichtung angeordnete schmale Ausführungsform oder aber durch eine säulenförmige Ausgestaltung.

Die erfindungsgemäße Vorrichtung zeichnet sich ferner dadurch aus, dass im Boden (101) des Grundkörpers (1) mindestens eine erste Öffnung (107) angeordnet ist. Diese erste Öffnung (107) ermöglicht für die Schadnager den Zutritt zum Innenraum (121). Die erste Öffnung (107) kann in jeder denkbaren geometrischen Form ausgestaltet sein. Vorteilhaft ist eine im wesentliche runde Ausführung, die einen Durchmesser hat, welcher es den zu bekämpfenden Schadnagern ermöglicht, gerade noch in das Innere des Grundkörpers (1) zu gelangen.

Die Vorrichtung zeichnet sich darüber hinaus dadurch aus, dass in dem ersten Formteil (5) mindestens eine zweite Öffnung (501) angeordnet ist, die mit der mindestens einen ersten Öffnung (107) im Boden (101) des Grundkörpers (1) korrespondiert. Damit wird gewährleistet, dass die Schadnager durch die korrespondierenden ersten und zweiten Öffnungen (107, 501) in das Innere des ersten Formteils (5) gelangen, d.h. in den Innenraum (121).

Wie vorstehend beschrieben hat das Merkmal des Standelements (105) den Vorteil, dass das natürliche Bewegungsumfeld der Schadnager nicht beeinträchtigt wird und den Schadnagern bekannte Laufwege durch das Aufstellen der erfindungsgemäßen Vorrichtung gemäß erstem Aspekt nicht verstellt werden. Die beiden Merkmale der mindestens einen ersten Öffnung (107) und mindestens einen zweiten Öffnung (501) tragen der Tatsache Rechnung, dass Schadnager von Natur aus neugierig sind und auf der Suche nach Verstecken oder Nistplätzen Hohlräume mit engen Öffnungen bevorzugen. Auf diese Weise wird entlang des bekannten Laufweges im natürlichen Bewegungsumfeld für die Schadnager eine Rückzugsmöglichkeit geschaffen, in denen sie ausgehend von ihrem normalen Laufweg durch die korrespondierenden ersten und zweiten Öffnungen (107, 501) in den Hohlraum (d.h. in den Innenraum (121)) gelangen können. Ebenso können die Schadnager den Hohlraum auch wieder verlassen.

Der Abstand (A) hat eine Größe, die es den zu bekämpfenden Schadnagern ermöglichen, problemlos unter den Boden (101) der erfindungsgemäßen Vorrichtung hindurchzulaufen. Demgemäß kann der Abstand (A) abhängig von der Art des Schadnagers (z.B. Maus, Ratte) unterschiedlich sein. Für Mäuse gilt ein Abstand (A) von 1 cm bis 3 cm, insbesondere etwa 2 cm, für Ratten ein Abstand (A) von 5 cm bis 7 cm, insbesondere etwa 6 cm. Das Gleiche betrifft die generelle Dimensionierung der erfindungsgemäßen Vorrichtung, die auf die jeweilige Größe des zu bekämpfenden Schadnagers abgestimmt sein kann.

Eine Seite (insbesondere die Rückseite) des Grundkörpers (1) ist vorteilhafterweise so ausgeführt, dass vorhandene Systeme zur Wandbefestigung (z.B. "Speedpoint") verwendet werden können. Mit solchen Systemen sind eine versehentliche Entfernung und ein Umsetzen der erfindungsgemäßen Vorrichtung erschwert. Damit kann die erfindungsgemäße Vorrichtung auch für Auditierungen und Dokumentationen im Rahmen des IFS (International Food Standard) verwendet werden.

In einer Weiterbildung der erfindungsgemäßen Vorrichtung besteht das erste Formteil (5) aus einem organischen oder naturähnlichen Material. Dieses organische oder naturähnliche Material soll dazu beitragen, dass sich die Schadnager im Inneren der erfindungsgemäßen Vorrichtung wohl fühlen und diese als Rückzugsraum zum Verstecken oder Nisten annehmen.

Insbesondere ist dabei das organische Material ausgewählt aus Papier, Stoff, Stroh, Holz, Pflanzen, und/oder Fasermaterialien dieser Stoffe, oder das naturähnliche Material ausgewählt aus Steinwolle, Glaswolle.

Das organische Material kann beispielsweise aus einem Papierfaser- oder Holzfaserguss bestehen, wie er von Eierkartons bekannt ist. Solche Materialien werden von Schadnagern sehr gerne zum Nestbau verwendet, weshalb deren Einsatz für die erfindungsgemäße Vorrichtung von Vorteil ist. Ein anderes Beispiel ist sogenannte Putzwolle, die auch als Isoliermaterial, beispielsweise für KFZ-Motorhauben, verwendet wird. Ebenso werden naturähnliche Materialien wie Steinwolle oder Glaswolle von Schadnagern gerne verwendet.

Darüber hinaus ist eine Entsorgung des ersten Formteils (5) ohne Kontamination der Umgebung möglich. Kot, Urin und Fettschlieren befinden sich damit in dem Material des ersten Formteils (5), welche zusammen mit eventuell noch vorhandenen Resten des Bekämpfungsmittels entsorgt werden.

In einer Ausführungsform ist um die mindestens eine zweite Öffnung (501) in dem ersten Formteil (5) ein Hülsenabschnitt (503) vorgesehen, der durch die mindestens eine erste Öffnung (107) im Boden (101) des Grundkörpers (1) führt.

Dadurch, dass der Hülsenabschnitt (503) des ersten Formteils (5) aus dem Boden (101) des Grundkörpers (1) herausragt und darüber hinaus vorteilhafterweise aus einem organischen oder naturähnlichen Material besteht, wird es für den Schadnager noch attraktiver gemacht, durch die korrespondierenden ersten und zweiten Öffnungen (107, 501) in das Innere der erfindungsgemäßen Vorrichtung zu kriechen.

Es hat sich als vorteilhaft erwiesen, wenn das erste Formteil (5) eine Aufnahme (505) für einen Lockstoff und/oder einen Köder aufweist, um diesen sicher zu lagern und gegen unerwünschtes Herausfallen zu sichern.

In einer weiteren bevorzugten Ausführungsform weist der Deckel (3) an einer Seite ein mit dem Grundkörper (1) verbundenes oder verbindbares Scharnierteil (301) und an der gegenüber liegenden Seite einen mit dem Grundkörper (1) eingreifenden Verschlussmechanismus (303) auf.

Das mit dem Grundkörper (1) verbundene oder verbindbare Scharnierteil (301) kann in der einfachsten Form durch eine Haken/Öse-Konstruktion realisiert werden. Ebenfalls ist ein festes gegliedertes Scharnier denkbar. Es hat sich jedoch als vorteilhaft herausgestellt, wenn das Scharnierteil (301) einfach lösbar ist, um den Deckel (3) vollständig von dem Grundkörper (1) abzunehmen, beispielsweise zum Austausch des ersten Formteils (5) und/oder zur Reinigung der Vorrichtung.

Der mit dem Grundkörper (1) eingreifende Verschlussmechanismus (303) kann im einfachsten Falle aus einer Rastnase bestehen, um den Deckel (3) mit dem Grundkörper (1) fest zu verbinden.

Bezogen auf eine rechteckige Grundform der erfindungsgemäßen Vorrichtung können Scharnierteil (301) und Verschlussmechanismus (303) sowohl auf den jeweils kurzen Seiten als auch auf den jeweils langen Seiten angeordnet sein.

Insbesondere ist der Verschlussmechanismus (303) ein verschließbares Schloss, das in ein an dem Grundkörper (1) angebrachten Schließkörper (109) eingreift.

Ein mit einem Schlüssel oder entsprechenden Werkzeug fest verschließbares Schloss als Verschlussmechanismus (303) hat den Vorteil, dass die erfindungsgemäße Vorrichtung gegen unbefugtes Öffnen geschützt ist. Da im Inneren der erfindungsgemäßen Vorrichtung vergiftete Fraßköder oder ähnliche chemische Substanzen angeordnet werden, ist ein Zugriff von unbefugten Personen, insbesondere von Kindern, oder das unbeabsichtigte Öffnen durch Haustiere auf diese Weise zu verhindern.

Besonders bevorzugt wird ein Kunststoffschlüssel für den Verschlussmechanismus (303) mit Schließkörper (109) verwendet, zu dem nur Fachleute und spezielle, autorisierte Personen Zugriff haben.

Um die Umgebung für die Schadnager noch natürlicher zu gestalten, ist es vorteilhaft, wenn ferner ein in dem Deckel (3) angeordnetes zweites Formteil (7) umfasst ist. Dieses zweite Formteil (7) entspricht im Material vorzugsweise dem ersten Formteil (5). Damit wird der gesamte Innenraum (121) der Vorrichtung von dem vorstehend beschriebenen Formteilmaterial umgeben.

Vorteilhafterweise bestehen der Grundkörper (1) und/oder der Deckel (3) aus Kunststoff. Dadurch ist die erfindungsgemäße Vorrichtung gemäß erstem Aspekt auf sehr einfache Weise auf dem Wege des Spritzgusses kostengünstig herstellbar.

Dabei kann der Grundkörper (1) und/oder der Deckel (3) intransparent oder teiltransparent oder transluzent ausgestaltet sein.

Um für den Schadnager einen Rückzugsraum als Versteck oder Nistplatz anzubieten, ist es vorteilhaft, den Grundkörper (1) und/oder den Deckel (3) intransparent, d.h. undurchsichtig (beispielsweise aus schwarzem Kunststoff) zu gestalten. Wenn die erfindungsgemäße Vorrichtung nicht nur als Köderstation, sondern auch zur Überwachung von Schadnageraufkommen ("Monitoring") eingesetzt sein soll, kann es sinnvoll sein, den Grundkörper (1) oder zumindest den Deckel (3) auch teiltransparent oder transluzent auszugestalten, um so eine optische Detektion zu vereinfachen.

Ein die erfindungsgemäße Vorrichtung kennzeichnendes Merkmal besteht in der Zugänglichkeit des Innenraums (121) der Vorrichtung von unten durch die mindestens eine erste Öffnung (107), was dadurch ermöglicht wird, dass der Grundkörper (1) mit einem Abstand (A) zu einer Aufstandsfläche positioniert ist, wodurch das natürliche Bewegungsumfeld von Schadnagern nicht gestört wird, da die vorgeprägten Laufwege (durch Kot, Urin und Fettschlieren markiert) der Schadnager nicht unterbrochen werden.

Ein weiteres Merkmal ist, dass die erfindungsgemäße Vorrichtung von Schadnagern grundsätzlich immer wieder betreten und verlassen werden kann (sofern keine klassische Schlagfalle darin angeordnet ist, in welcher der Schadnager getötet wird). Insbesondere weist die erfindungsgemäße Vorrichtung keinerlei bauliche oder technische Hindernisse auf, welche die Schadnager am Verlassen hindern würden. Dies steht im Gegensatz zu vielen bekannten Systemen, bei denen Schadnager lebend gefangen oder aber unmittelbar getötet werden. Da die Schadnager sehr intelligente Tiere sind, halten sie sich häufiger von klassischen Fallen fern, sobald einmal ein Exemplar darin gefangen oder getötet wurde.

Durch das vermeintlich unbehelligte und sichere Betreten und Verlassen der Vorrichtung, ohne dabei eine Gefahr wahrzunehmen, akzeptieren die Schadnager die erfindungsgemäße Vorrichtung jedoch leichter und schneller als natürliche oder zumindest naturnahe "Wohn- und Nahrungsräumlichkeit". Dadurch kann die erfindungsgemäße Vorrichtung für das Überwachen von Schadnageraufkommen (sog. "Monitoring") eingesetzt werden. Daneben eignet sich die erfindungsgemäße Vorrichtung zum Verabreichen von vergifteten Fraßködern, die ihre letale Wirkung erst zeitversetzt zeigen, so dass die Schadnager außerhalb der Vorrichtung getötet werden.

Um dieses Monitoring zu verbessern, können an der mindestens einen ersten Öffnung (107) auch mechanische oder elektronische Zähler angebracht werden (in den Figuren nicht dargestellt), welche die Anzahl der Durchgänge von Schadnagern erfassen.

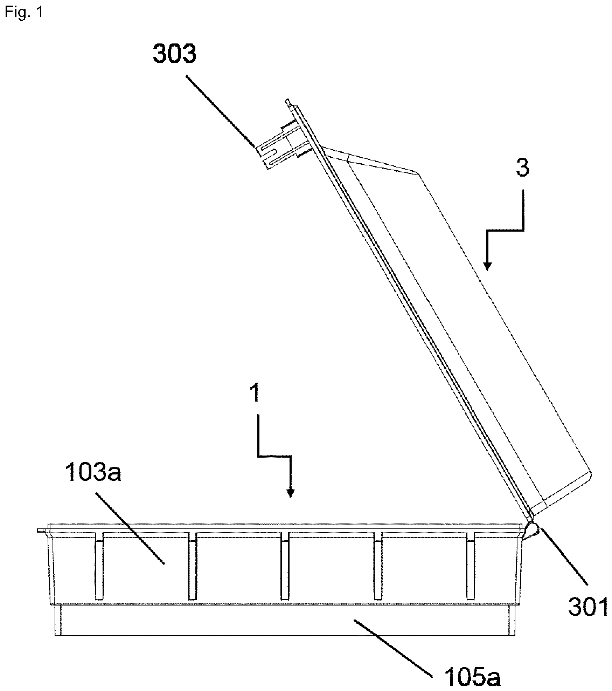

Die vorstehend beschriebene erfindungsgemäße Vorrichtung kann in einer speziellen Ausführungsform der Erfindung einen Zwischenboden (123) umfassen (in den Figuren 1 bis 6 nicht dargestellt), der mit einem Abstand (B) über dem Boden (101) innerhalb des Grundkörpers (1) angeordnet ist und damit einen Zwischenraum in dem Grundkörper (1) bildet.

Mit dem Vorsehen des Zwischenbodens (123) und damit mit dem Schaffen eines Zwischenraums in der erfindungsgemäßen Vorrichtung wird für die Schadnager ein zusätzlicher Rückzugsraum geschaffen, der als sicher wahrgenommen wird und daher die Akzeptanz der erfindungsgemäßen Vorrichtung noch weiter erhöht. Der Zwischenraum ist insbesondere nahezu dunkel ausgestaltet, da er nur über die mindestens eine erste Öffnung (107) erreichbar ist, durch welche kaum Licht einfällt.

In Bezug auf die erfindungsgemäße Vorrichtung kann der Zwischenboden (123) aus dem Material des Grundkörpers (1) hergestellt werden, d.h. beispielsweise im Spitzguss aus einem relativ dünnwandigen Material

Vorteilhaft ist es aber ebenso, wenn der Zwischenboden (123) zumindest teilweise aus dem Material des ersten Formteils (5), insbesondere aus einem organischen oder naturähnlichen Material hergestellt wird.

Die Ausführungsform hat den Vorteil, dass sich die Schadnager im Inneren der erfindungsgemäßen Vorrichtung wohl fühlen und diese als Rückzugsraum zum "sicheren" Verstecken und/oder geeigneten Nisten annehmen, entweder weil sie ein organisches oder naturähnliches Material vorfinden.

Insbesondere weist bei dieser speziellen Ausführungsform der Zwischenboden (123) mindestens eine dritte Öffnung (1211) auf, die eine Verbindung zwischen dem Zwischenraum und einem Innenraum (121) bildet.

Auf diese Weise wird sichergestellt, dass die Schadnager aus dem Zwischenraum in den Innenraum (121) wechseln können und so beispielsweise an einen Fraßköder gelangen.

Es hat sich für die Akzeptanz der erfindungsgemäßen Vorrichtung als vorteilhaft herausgestellt, wenn in dem Zwischenraum Einbauten vorgesehen sind, die ausgehend von der mindestens einen dritten Öffnung (1211) röhrenförmig zu der mindestens einen ersten Öffnung (107) führen.

Mit dieser baulichen Ausführung werden den Schadnagern naturähnliche Gänge als Versteck und Bewegungswege angeboten.

Die Einbauten können in einer Weiterbildung einstückig mit dem Boden (101) oder dem Zwischenboden (123) ausgebildet sein.

Hierdurch wird zunächst die Herstellung der erfindungsgemäßen Vorrichtung vereinfacht, da weniger Teile hergestellt werden müssen. Bezüglich der erfindungsgemäßen Vorrichtung kann der Zwischenboden (123) in der gleichen Weise oder gemeinsam mit dem ersten Formteil (5) aus dem entsprechenden Material hergestellt werden, z.B. durch einen Papierfaser- oder Holzfaserguss.

Zudem kann, wie vorstehend in Bezug auf den Zwischenboden (123) beschrieben, durch die geeignete Wahl des Materials für die Einbauten der beschriebene Effekt des Wohlfühlens und das Annehmen der erfindungsgemäßen Vorrichtung als Rückzugsraum zum "sicheren" Verstecken und/oder geeigneten Nisten noch verstärkt werden.

Weitere Ziele, Merkmale, Vorteile und Anwendungsmöglichkeiten ergeben sich aus der nachfolgenden Beschreibung von die Erfindung nicht einschränkenden Ausführungsbeispielen anhand der Figuren. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung. Es zeigen:
- Fig. 1: eine schematische Seitendarstellung der erfindungsgemäßen Vorrichtung im geöffneten Zustand nach einer Ausführungsform der Erfindung,
- Fig. 2: eine schematische perspektivische Darstellung der in Figur 1 gezeigten erfindungsgemäßen Vorrichtung,
- Fig. 3: eine schematische perspektivische Darstellung der in Figuren 1 und 2 gezeigten erfindungsgemäßen Vorrichtung mit herausgehobenem ersten Formteil 5,
- Fig. 4: eine schematische perspektivische Darstellung der in Figur 2 gezeigten erfindungsgemäßen Vorrichtung ohne erstes Formteil 5,
- Fig. 5: eine schematische perspektivische Darstellung des Grundkörpers 1 mit eingelegtem ersten Formteil 5 nach einer Ausführungsform der Erfindung,
- Fig. 6: eine schematische perspektivische Darstellung der Unterseite der erfindungsgemäßen Vorrichtung nach einer Ausführungsform der Erfindung, und

Fig. 7 eine schematische perspektivische Darstellung einer Vorrichtung nach einer speziellen Ausführungsform mit Zwischenboden 123.
Gleiche Teile haben in allen Figuren die gleichen Bezugszeichen, aus Gründen der Übersichtlichkeit werden jedoch nicht alle Teile in allen Figuren mit Bezugszeichen versehen.

In Figur 1 wird eine schematische Seitendarstellung der erfindungsgemäßen Vorrichtung im geöffneten Zustand nach einer Ausführungsform der Erfindung gezeigt.

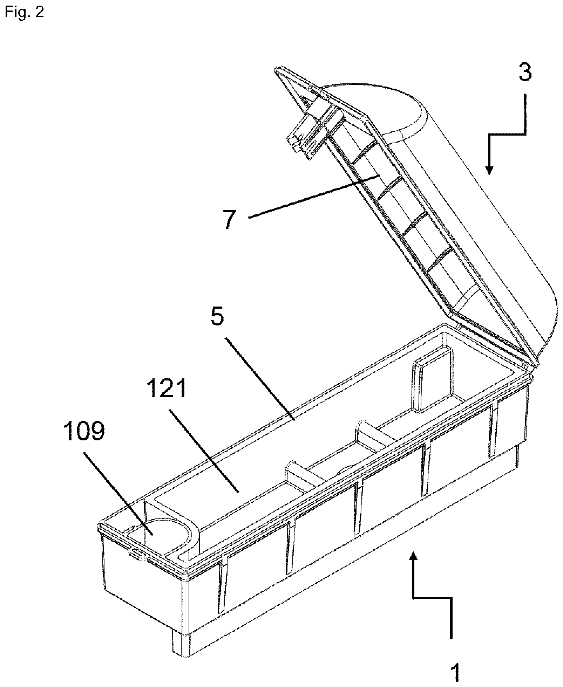

In Figur 2 wird eine schematische perspektivische Ansicht der erfindungsgemäßen Vorrichtung im aufgeklappten Zustand dargestellt, bei der in dem Grundkörper 1 das Formteil 5 angeordnet ist. Der Deckel 3 ist zur besseren Ansicht geöffnet dargestellt. Der Verschlussmechanismus 303 ist hier als einfache Rastverbindung dargestellt. Die in Figur 1 gezeigte Ausführungsform ist dazu ausgelegt, mit der vorne dargestellten Seitenwand an einer geraden Fläche seitlich angerordnet zu werden, da hier ein Standelement 105a durchgängig über die gesamte Länge dargestellt ist.

Die Seite mit dem durchgängigen Standelement 105a ist in dieser Ausführungsform so ausgeführt, dass die erfindungsgemäße Vorrichtung mit dem vorhandenen Speedpoint-System zur Wandbefestigung verwendet werden kann.

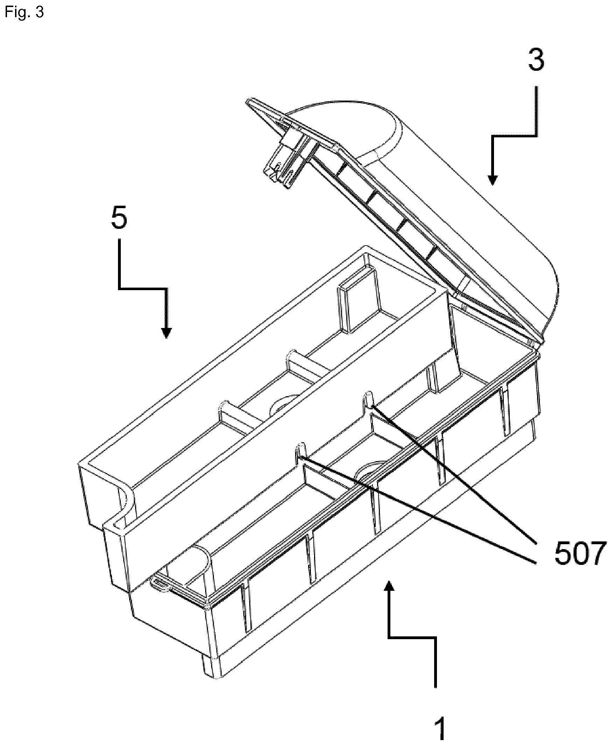

Figur 3 zeigt eine Darstellung, in der das erste Formteil 5 aus dem Grundkörper 1 herausgenommen dargestellt wird, um dessen Anordnung deutlich darzustellen.

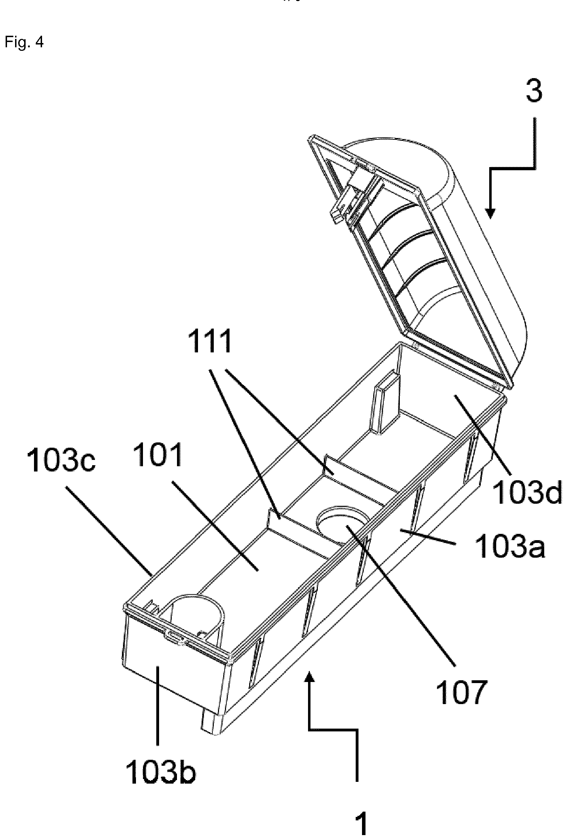

In Figur 4 ist ein Einblick in den Grundkörper 1 mit darüber geöffnetem Deckel 3 dargestellt. In der Mitte ist die erste Öffnung 107 zu erkennen, neben der zwei Rippen 111 angeordnet sind. Diese dienen in erster Linie als Stege bzw. Abtrennungen zwischen der ersten Öffnung 107 und dem übrigen Innenraum 121, um ein Austragen oder Verschleppen der Köderpräparate zu erschweren. Diese Präparate sollen nicht sofort oder versehentlich durch die ersten Öffnung 107 fallen können. Andererseits dienen die Rippen 111 als Verstärkungsrippen zum Aussteifen des Grundkörpers 1 und greifen sie in entsprechende Nuten 507 des ersten Formteils 5 ein, wie sie in Figur 3 zu erkennen sind.

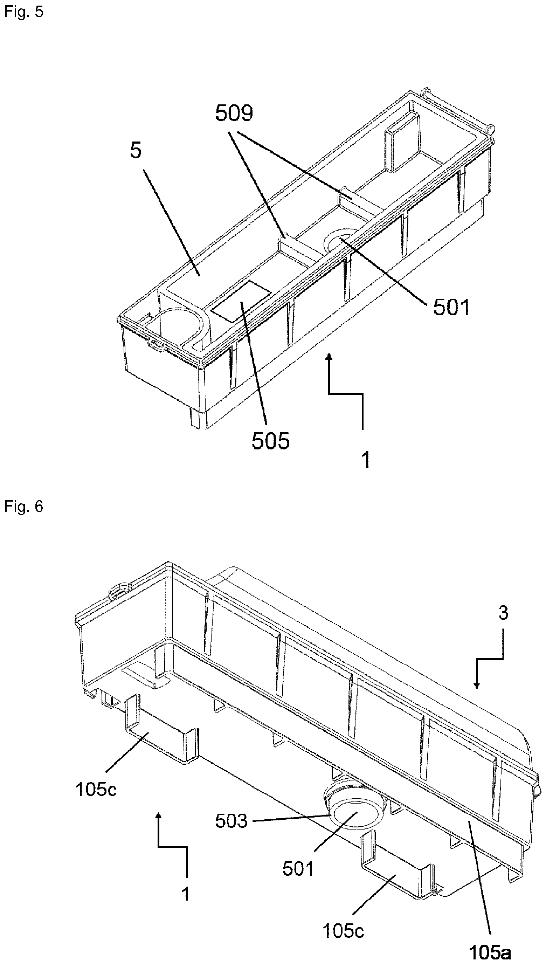

Figur 5 stellt den Grundkörper 1 mit eingesetztem ersten Formteil 5 dar. Die zweite Öffnung 501 korrespondiert mit der ersten Öffnung 107 des Grundkörpers 1. Die Erhebungen 509 entsprechen den darunterliegenden Nuten 507 und teilen den Eingangsraum um die zweite Öffnung 501 ab. Diese dienen ähnlich wie die Rippen 111 in erster Linie als Stege bzw. Abtrennungen zwischen der zweiten Öffnung 501 und dem übrigen Innenraum 121, um ebenfalls ein Austragen oder Verschleppen der Köderpräparate zu erschweren. Beispielhaft im vorderen Bereich in der Nähe des Schließkörpers 109 ist die Aufnahme 505 für einen Fraßköder dargestellt.

Figur 6 zeigt die erfindungsgemäße Vorrichtung in einer perspektivischen Ansicht von unten. Zu erkennen ist das in Bezug auf Figur 2 bereits angesprochene über die ganze Länge sich erstreckende Standelement 105a. Auf der gegenüberliegenden langen Seite des Grundkörpers 1 sind zwei kleinere, in Längsrichtung angeordnete Standelemente 105b, 105c dargestellt, die das natürliche Bewegungsumfeld der Schadnager nur geringfügig beeinträchtigen. Ferner ist der Hülsenabschnitt 503 dargestellt, mit dem die zweite Öffnung 501 durch die erste Öffnung 107 hindurch ragt, um so einen für Schadnager interessanten Einstieg aus organischem oder naturähnlichem Material zu bilden.

Die erfindungsgemäße Vorrichtung eignet sich zur Durchführung eines Verfahrens zur Bekämpfung von Schadnagern. In einem ersten Schritt werden hierbei zunächst das natürliche Bewegungsumfeld und die natürlichen Laufstrecken der Schadnager identifiziert. In einem zweiten Schritt wird die erfindungsgemäße Vorrichtung in diesem natürlichen Bewegungsumfeld positioniert, wobei durch die erfindungsgemäße Ausgestaltung die Vorrichtung über den Laufweg angeordnet werden kann, ohne diesen zu unterbrechen.

Anschließend wird die erfindungsgemäße Vorrichtung mit einem Lockstoff oder einem Fraßköder bestückt, welcher insbesondere in der Aufnahme 505 des ersten Formkörpers 5 angeordnet wird. Durch die natürliche Neugier der Schadnager und deren Bestreben, Verstecke und Rückzugsräume zu finden, wird der Schadnager durch den Hülsenabschnitt 503, der aus natürlichem oder naturähnlichem Material gebildet aus der Vorrichtung herausragt, in das Innere der erfindungsgemäßen Vorrichtung gelockt. Durch die Auskleidung der Vorrichtung mit den erfindungsgemäßen Materialien wird auf diese Weise eine Art "Wohlfühlraum" für den Schadnager gestaltet. Die Schadnager ziehen sich somit gerne in die erfindungsgemäße Vorrichtung zurück, um dort Nestbau zu betreiben oder sich ein Versteck bauen. In diesem Umfeld ist die Wahrscheinlichkeit sehr hoch, dass die Aufnahme des Fraßköders und damit die Bekämpfung des Schadnagers problemlos und erfolgreich vorgenommen werden kann.

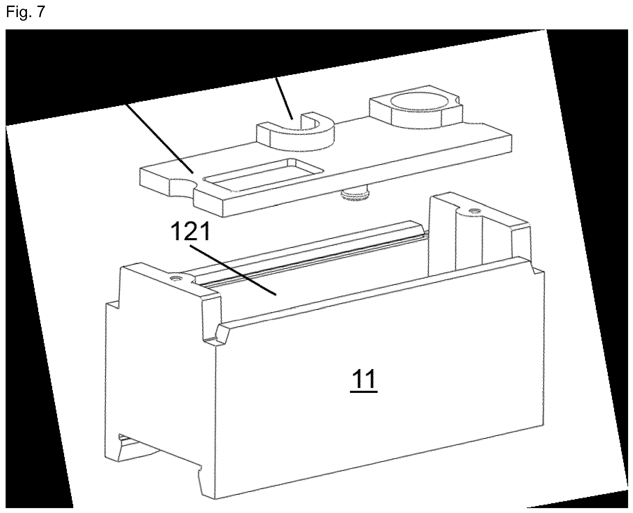

In Figur 7 wird eine spezielle Ausführungsform mit Zwischenboden 123 dargestellt. Die konkrete Darstellungen beziehen sich beispielhaft sich auf eine Vorrichtung, welche sich baulich und geometrisch von der in den Figuren 1 bis 6 dargestellten Ausführungsform unterscheidet. Daher wird in Figur 7 nur das Grundprinzip dargestellt.

Figur 7 zeigt schematisch in der Perspektive eine Vorrichtung mit einem aus dem Grundkörper 11 herausgehobenen Zwischenboden 123.

Der Zwischenboden 123 selbst weist mindestens eine dritte Öffnung 1211 auf, die hier in der Längsrichtung mittig am seitlichen Rand angeordnet ist. In der Oberseite des Zwischenbodens 123, die in den Innenraum 121 weist, kann eine Einrichtung für die Aufnahme eines Köders (hier nicht mit Bezugszeichen versehen hinten rechts) und/oder eine Aufnahme für eine Schlagfalle (hier nicht mit Bezugszeichen versehen vorne links) vorgesehen sein.

### Bezugszeichen

- 1, 11: Grundkörper
- 101: Boden
- 103: umlaufende Wand
- 105: Standelement
- 107: erste Öffnung
- 109: Schließkörper
- 111: Rippen
- 121: Innenraum
- 1211: dritte Öffnung
- 123: Zwischenboden
- 3: Deckel
- 301: Scharnierteil
- 303: Verschlussmechanismus
- 5: erstes Formteil
- 501: zweite Öffnung
- 503: Hülsenabschnitt
- 505: Aufnahme
- 507: Nuten
- 509: Erhebungen
- 7: zweites Formteil
- A: Abstand Grundkörper 1 zu einer Aufstandfläche
- B: Abstand Zwischenboden 123 über dem Boden 101

## Patentansprüche

1. Vorrichtung zur Bekämpfung von Schadnagern, umfassend
- einen Grundkörper (1), der einen Boden (101) und eine um den Boden (101) umlaufende Wand (103) aufweist,
- einen den Grundkörper (1) abschließenden Deckel (3) und
- ein in dem Grundkörper (1) angeordnetes erstes Formteil (5),
**dadurch gekennzeichnet,**
**dass** der Grundkörper (1) auf mindestens einem Standelement (105) ruht, das den Grundkörper (1) mit einem Abstand (A) zu einer Aufstandfläche positioniert,
**dass** im Boden (101) des Grundkörpers (1) mindestens eine erste Öffnung (107) angeordnet ist, und
**dass** in dem ersten Formteil (5) mindestens eine zweite Öffnung (501) angeordnet ist, die mit der mindestens einen ersten Öffnung (107) im Boden (101) des Grundkörpers (1) korrespondiert.

2. Vorrichtung nach Anspruch 1, wobei das erste Formteil (5) aus einem organischen oder naturähnlichen Material besteht.

3. Vorrichtung nach einem der Ansprüche 1 oder 2, wobei um die mindestens eine zweite Öffnung (501) in dem ersten Formteil (5) ein Hülsenabschnitt (503) vorgesehen ist, der durch die mindestens eine erste Öffnung (107) im Boden (101) des Grundkörpers (1) führt.

4. Vorrichtung nach einem der Ansprüche 1 bis 3, wobei das erste Formteil (5) eine Aufnahme (505) für einen Lockstoff und/oder einen Köder aufweist.

5. Vorrichtung nach einem der Ansprüche 1 bis 4, wobei der Deckel (3) an einer Seite ein mit dem Grundkörper (1) verbundenes oder verbindbares Scharnierteil (301) und an der gegenüber liegenden Seite einen mit dem Grundkörper (1) eingreifenden Verschlussmechanismus (303) aufweist.

6. Vorrichtung nach einem der Ansprüche 1 bis 5, ferner umfassend einen Zwischenboden (123), der mit einem Abstand (B) über dem Boden (101) innerhalb des Grundkörpers (1) angeordnet ist und damit einen Zwischenraum in dem Grundkörper (1) bildet.

7. Vorrichtung nach Anspruch 6, wobei der Zwischenboden (123) mindestens eine dritte Öffnung (1211) aufweist, die eine Verbindung zwischen dem Zwischenraum und einem Innenraum (121) bildet.

8. Vorrichtung nach Anspruch 7, wobei in dem Zwischenraum Einbauten vorgesehen sind, die ausgehend von der mindestens einen dritten Öffnung (1211) röhrenförmig zu der mindestens einen ersten Öffnung (107) führen.

9. Vorrichtung nach Anspruch 8, wobei die Einbauten einstückig mit dem Boden (101) oder dem Zwischenboden (123), ausgebildet sind.

## Claims

1. Device for the control of rodents, comprising
- a base body (1) having a bottom (101) and a wall (103) surrounding the bottom (101),
- a cover (3) closing the base body (1) and
- a first moulded part (5) arranged in the base body (1),
**characterized,**
**in that** the base body (1) rests on at least one stand element (105) which positions the base body (1) at a distance (A) from a support surface,
**in that** at least one first opening (107) is arranged in the base (101) of the basic body (1), and
**in that** at least one second opening (501) is arranged in the first moulded part (5), which corresponds to the at least one first opening (107) in the base (101) of the basic body (1).

2. Device according to claim 1, wherein the first moulded part (5) consists of an organic or nature-like material.

3. Device according to one of claims 1 or 2, wherein a sleeve section (503) is provided around the at least one second opening (501) in the first moulded part (5), which leads through the at least one first opening (107) in the base (101) of the basic body (1).

4. Device according to any of claims 1 to 3, wherein the first moulded part (5) has a receptacle (505) for an attractant and/or a bait.

5. Device according to any of claims 1 to 4, wherein the cover (3) has a hinge part (301) connected or connectable to the base body (1) on one side and a locking mechanism (303) engaging with the base body (1) on the opposite side.

6. Device according to any of claims 1 to 5, further comprising an intermediate bottom (123) disposed at a distance (B) above the bottom (101) inside the base body (1) and thus forming a space in the base body (1).

7. Device according to claim 6, wherein the intermediate floor (123) comprises at least one third opening (1211) which forms a communication between the intermediate space and an interior space (121).

8. Device according to claim 7, wherein built-in components are provided in the intermediate space, which lead in a tubular manner from the at least one third opening (1211) to the at least one first opening (107).

9. Device according to claim 8, wherein the built-in components are formed in one piece with the floor (101) or the intermediate floor (123).

## Revendications

1. Dispositif pour lutter contre les rongeurs, comprenant
- un corps de base (1), présentant un fond (101) et une paroi (103) circonférentielle audit fond (101),
- un couvercle (3) assurant la fermeture du corps de base (1) et
- une première pièce moulée (5) disposée dans le corps de base (1), **caractérisé en ce que**
le corps de base (1) repose sur au moins un élément-support (105) positionnant le corps de base (1) à une distance (A) d'une surface de mise en place, **en ce qu'**au moins une première ouverture (107) est disposée dans le fond (101) du corps de base (1),
et
**en ce qu'**au moins une deuxième ouverture (501) est disposée dans la première pièce moulée (5), ladite ouverture correspondant avec la première ouverture au moins (107) dans le fond (101) du corps de base (1).

2. Dispositif selon la revendication 1, la première pièce moulée (5) étant composée d'une matière organique ou comparable à une matière naturelle.

3. Dispositif selon l'une quelconque des revendications 1 ou 2, une partie manchon (503) menant à travers la première ouverture au moins (107) disposée dans le fond (101) du corps de base (1), ladite partie manchon étant prévue autour de la deuxième ouverture au moins (501) ménagée dans la première pièce moulée (5).

4. Dispositif selon l'une quelconque des revendications 1 à 3, la première pièce moulée (5) présentant un espace de réception (505) pour un appât et/ou un leurre.

5. Dispositif selon l'une quelconque des revendications 1 à 4, le couvercle (3) présentant d'un côté un élément charnière (301) relié ou pouvant être relié au corps de base (1), et du côté opposé, un mécanisme de fermeture (303) s'engageant avec le corps de base (1).

6. Dispositif selon l'une quelconque des revendications 1 à 5, comprenant en outre un fond intermédiaire (123), disposé à une distance (B) au-dessus du fond (101) à l'intérieur du corps de base (1) et formant ainsi un espace intermédiaire dans le corps de base (1).

7. Dispositif selon la revendication 6, ledit fond intermédiaire (123) présentant au moins une troisième ouverture (1211) établissant une liaison entre l'espace intermédiaire et un espace intérieur (121).

8. Dispositif selon la revendication 7, ledit espace intermédiaire accueillant des aménagements prévus menant, depuis la troisième ouverture au moins (1211), à la première ouverture au moins (107) sous une forme tubulaire.

9. Dispositif selon la revendication 8, lesdits aménagements étant d'un seul tenant avec le fond (101) ou le fond intermédiaire (123).
